# EUROPÄISCHE PATENTSCHRIFT

(11) **EP 0 688 275 B1**
(45) Veröffentlichungstag und Bekanntmachung des Hinweises auf die Patenterteilung: **01.10.1997**
(21) Anmeldenummer: 95900071.2
(22) Anmeldetag: 04.11.1994
(51) Int. Cl.: B60Q 1/14

(54) **LENKSTOCKSCHALTER FÜR KRAFTFAHRZEUGE**
MOTOR-VEHICLE STEERING-COLUMN SWITCH
INTERRUPTEUR SUR COLONNE DE DIRECTION POUR VEHICULES AUTOMOBILES

(30) Priorität: 16.11.1993 DE 4339095
(43) Veröffentlichungstag der Anmeldung: 27.12.1995
(73) Patentinhaber: EATON CONTROLS GmbH & Co. KG, 55445 Langenlonsheim (DE)
(72) Erfinder: MAHR, Herrmann, D-55425 Waldalgesheim (DE); KUNZ, Peter, D-55422 Breitscheid (DE)
(74) Vertreter: Becker, Bernd, Dipl.-Ing.
(86) Internationale Anmeldenummer: DE9401315
(87) Internationale Veröffentlichungsnummer: WO9513936

(56) Entgegenhaltungen:
- DE-A- 4 305 827
- FR-A- 2 219 650

## Beschreibung

Die Erfindung bezieht sich auf einen Lenkstockschalter für Kraftfahrzeuge, der am Ende eines die Lenksäule aufnehmenden Mantelrohres angeordnet ist und mehrere, je aus einem Gehäuse mit elektrischen Anschlüssen und einem Betätigungsorgan bestehenden Einzelschalter aufweist.

Bei einem aus der nicht vorveröffentlichten DE 43 05 827 A1 bekannten Lenkstockschalter sind die Einzelschalter alle an einer Trägerplatte befestigt. Jeder Einzelschalter wird über entsprechende Führungsmittel, welche sowohl an der Trägerplatte als auch am Einzelschalter vorhanden sind, auf die Trägerplatte aufgesteckt und durch eine lösbare Klipsverbindung festgelegt. Für das Befestigen mehrerer Einzelschalter muß die Trägerplatte genügend Platz aufweisen, um alle Führungsmittel sowie Klipsverbindungen zu realisieren. Dies gilt sowohl für die Befestigung der Einzelschalter auf der Peripherie der Trägerplatte als auch in der Tiefe der Trägerplatte, d.h. in Richtung des Verlaufes der Lenksäule. Durch diese Anforderungen wird die Trägerplatte sehr groß, was sich auch in den Werkzeugen und den damit verbundenen Werkzeugkosten wiederspiegelt. Bei Einzelschaltern, die hintereinander an der Trägerplatte befestigt werden, muß noch genügend Zwischenraum für die Montage vorhanden sein, wodurch die Baugröße nochmals vergrößert wird. Im Zuge der Stabilisierung wird die im Kraftfahrzeug eingebaute Trägerplatte so ausgelegt, daß eine Maximalkonfiguration mit Einzelschaltern möglich ist. Dadurch ist immer eine große Trägerplatte eingebaut, welche einen großen Raum beansprucht, selbst bei nicht belegten Führungsmitteln. Durch die Maximalträgerplatte ist auch ständig die schwerste Ausführung im Kraftfahrzeug vorhanden, was den Anstrengungen der Gewichtsreduzierung widerspricht.

Der Erfindung liegt die Aufgabe zugrunde, einen Lenkstockschalter der eingangs genannten Art zu schaffen, bei dem ohne Änderung der Trägerplatte Einzelschalter ohne Zuhilfenahme eines Werkzeuges schnell, leicht und spielfrei miteinander verbunden und wieder gelöst werden können.

Diese Aufgabe wird erfindungsgemäß dadurch gelöst, daß mindestens ein Einzelschalter auf den anderen Einzelschalter gegen die Kraft einer Feder unter dem Zusammenspiel entsprechender Führungsmittel aufsteckbar und in seiner Endposition durch eine lösbare Klipsverbindung festgelegt ist.

Nach einer vorteilhaften Weiterbildung der Erfindung ist der eine Einzelschalter als Grundschalter am Ende des Mantelrohres befestigt, und der andere Einzelschalter ist als Aufsteckschalter auf das Gehäuse des Grundschalters aufsteckbar. Der Grundschalter nimmt somit den Platz am Mantelrohr bzw. dessen Trägerplatte ein und ist dort festgelegt. Für den Aufsteckschalter ist an der Trägerplatte kein zusätzlicher Platz oder zusätzliche Führungsmittel erforderlich, wodurch die Trägerplatte klein und die Anzahl der Trägerplatten gering gehalten wird.

Bevorzugt ist ferner, daß am Aufsteckschalter mindestens ein Nutstein vorgesehen ist, der in eine Nut des Grundschalters eingreift. Das Integrieren der Nut in den Grundschalter ist insofern vorteilhaft, als daß keine vorstehenden Formelemente vorhanden sind, hinter denen sich an der Lenksäule vorhandene elektrische Leitungen oder sonstige Elemente verhaken können.

Zur Vermeidung des Verhakens von elektrischen Leitungen und zur Erneuerung einer besseren Realisierung der Führung sind nach einer weiteren vorteilhaften Ausgestaltung des Erfindungsgegenstandes zwei Nutsteine des Aufsteckschalters an Stegen am Gehäuse des Aufsteckschalters angebracht, die annähernd die gleiche Länge wie das Gehäuse des Grundschalters besitzen und über Laschen am Gehäuse abgestützt sind.

Bei einer vorteilhaften Weiterbildung der Erfindung ist jeder Nutstein des Aufsteckschalters T-förmig ausgebildet, wobei die zwischen dem Steg und dem Kopf des Nutsteines liegende Fläche schräg ausgeführt ist. Weiterhin besteht zweckmäßigerweise die Nut des Grundschalters aus zum Gehäuse senkrecht angeformten Wänden und je einem senkrecht zur Wand verlaufenden Winkel, wobei die Winkel zueinander ausgerichtet sind, die Innenfläche zwischen Wand und Winkel schräg verläuft und an einem Ende der Nut die Wand und der Winkel verbunden sind. Diese Ausgestaltung der sich paarenden Formelemente gewährleistet einen guten Krafteintritt in die Gehäuse, eine genaue Paßtoleranz und verhindert das falsche Einsetzen der Formelemente.

Um eine spielfreie Klipsverbindung zu erhalten ist ferner bevorzugt vorgesehen, daß die als Schraubenfeder ausgebildete Feder unverlierbar in ein Sackloch im Gehäuse des Aufsteckschalters eingesetzt ist.

Nach einer vorteilhaften Weiterbildung der Erfindung weist eine Wand des Sackloches einen Schlitz auf, der axial zum Sackloch verläuft. Hierbei kann das Gegenlager zur Schraubenfeder kurz gehalten werden kann.

Das Gegenlager wird nach einer vorteilhaften Weiterbildung der Erfindung dadurch gebildet, daß am Gehäuse des Grundschalters ein stumpfförmiger Ansatz angebracht ist, der beim Herstellen der Klipsverbindung in den Schlitz des Sackloches im Gehäuse des Aufsteckschalters eintaucht und die Feder zusammendrückt.

Nach einer weiteren vorteilhaften Ausgestaltung der Erfindung weist die Klipsverbindung einen federnden Klipsarm mit einer Klipsnase auf, die hinter einer Schulter eines Klipssteges einrastet. Um eine kostengünstige Herstellung der Klipselemente sowie ein Lösen der Klipsverbindung von Hand zu ermöglichen, ist nach einer vorteilhaften Weiterbildung der Erfindung der federnde Klipsarm der Klipsverbindung am Gehäuse des Aufsteckschalters und der Klipsteg mit der Schulter am Gehäuse des Grundschalters angeordnet, wobei der federnde Klipsarm einen Lösehebel, der über die Schulter des Klipssteges in einen Freiraum hineinragt, aufweist.

Der der Erfindung zugrundeliegende Gedanke wird in der nachdolgenden Beschreibung anhand eines Ausführungsbeispieles, das in der Zeichnung dargestellt ist, näher erläutert. Es zeigt:
- Fig. 1: eine Draufsicht auf einen Lenkstockschalter mit Mantelrohr, Lenksäule und Trägerplatte,
- Fig. 2: eine Ansicht auf den Lenkstockschalter gemäß Fig. 1 in Richtung des Pfeiles II mit Teilschnitten,

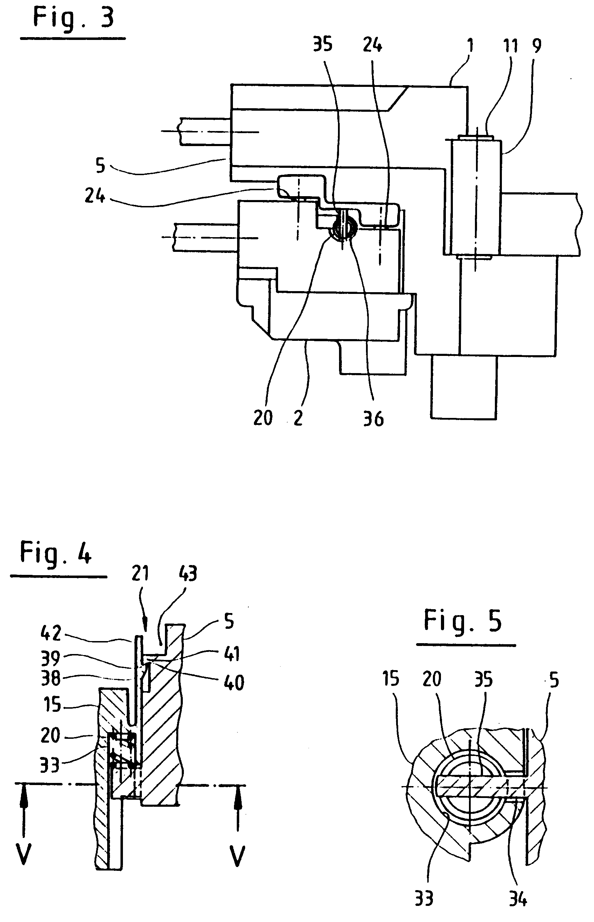

- Fig. 3: eine Ansicht auf den Lenkstockschalter gemäß Fig. 1 in Richtung des Pfeiles III,
- Fig. 4: einen Teilschnitt gemäß Fig. 2 in Richtung der Pfeile IV-IV,
- Fig. 5: einen Schnitt durch Fig. 4 in Richtung der Pfeile V-V in vergrößerter Darstellung,

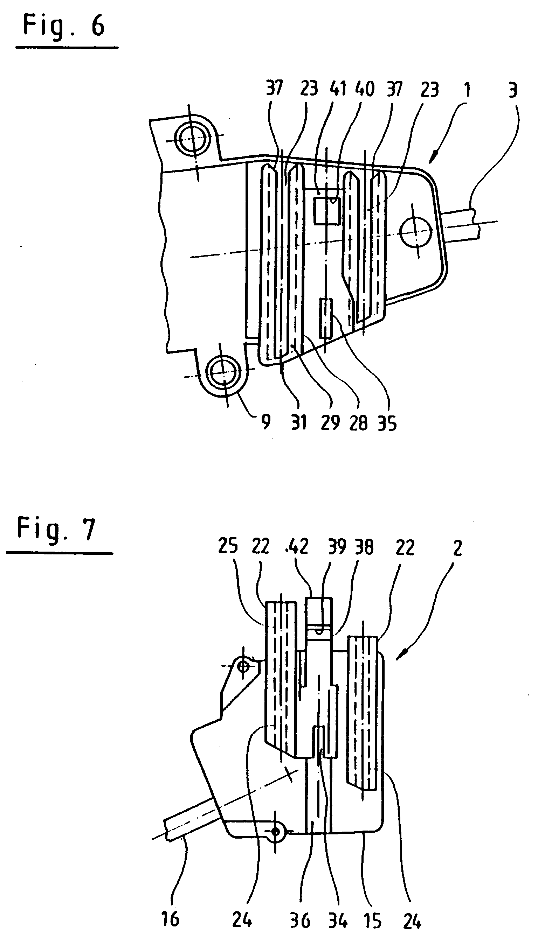

- Fig. 6: eine Ansicht auf den Grundschalter mit Blickrichtung auf die Verbindungselemente und
- Fig. 7: eine Ansicht auf den Aufsteckschalter mit Blickrichtung auf die Verbindungselemente.

Der Lenkstockschalter umfaßt zwei Einzelschalter und zwar einen Grundschalter 1 und einen Aufsteckschalter 2, wobei der Grundschalter 1 einen Betätigungshebel 3 und eine Drucktaste 4 besitzt. Das Gehäuse 5 des Grundschalters 1 ist winklig ausgelegt und liegt über einer Trägerplatte 6, welche am Mantelrohr 7 befestigt ist. Im Mantelrohr 7 ist die Lenksäule 8 gelagert. Über Anschraubaugen 9 ist der Grundschalter 1 an der Trägerplatte 6 befestigt. Am Betätigungshebel 3 des Grundschalters 1 befindet sich eine elastische Manschette 10, welche die Eintrittsöffnung des Betätigungshebels 3 in das Gehäuse 5 des Grundschalters 1 abdeckt. In den Anschraubaugen 9 des Gehäuses 5 sind Hülsen 11 eingesetzt, deren Länge größer ist als die Länge der Anschraubaugen 9. Auf der dem Betätigungshebel 3 entgegengesetzten Seite des Gehäuses 5 des Grundschalters 1 ist ein umlaufender Kragen 12 angeformt, der die elektrischen Anschlüsse 13 schützt.

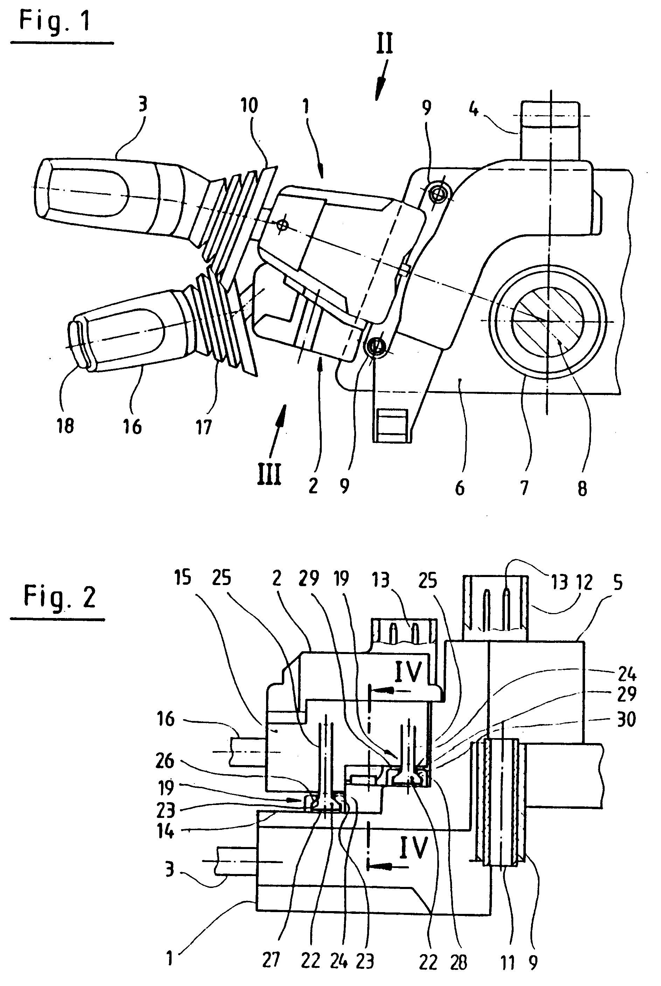

Wie aus Fig. 2 ersichtlich, ist die Rückseite 14 des Gehäuses 5 stufig ausgebildet. Das Gehäuse 15 des Aufsteckschalters 2 ist in seiner Form dem stufigen Bereich der Rückseite 14 des Gehäuses 5 angepaßt. Der Aufsteckschalter 2 weist ferner ein Betätigungsorgan 16 mit einer zugehörigen Manschette 17 auf. Im vorderen Bereich besitzt das Betätigungsorgan 16 einen weiteren Druckknopf 18. Der Grundschalter 1 und der Aufsteckschalter 2 sind jeweils Einzelschalter, welche unter dem Zusammenspiel entsprechender Führungsmittel 19 gegen die Kraft einer Feder 20 aufeinander aufsteckbar sind. Die Endposition ist durch eine lösbare Klipsverbindung 21 festgelegt.

Der als Grundschalter 1 dienende Einzelschalter ist am Ende des Mantelrohres 7 befestigt. Der als Aufsteckschalter 2 ausgeführte Einzelschalter ist auf das Gehäuse 5 des Grundschalters 1 aufsteckbar. Mindestens ein Nutstein 22 ist am Aufsteckschalter 2 vorgesehen, der in eine Nut 23 des Grundschalters 1 eingreift.

Am Gehäuse 15 des Aufsteckschalters sind Stege 24 angebracht, die zwei Nutsteine 22 tragen. Die Nutsteine 22 besitzen annähernd die gleiche Länge wie das Gehäuse 5 des Grundschalters 1. Der überstehende Bereich der Nutsteine 22 ist über Laschen 25 am Gehäuse 15 des Aufsteckschalters 2 abgestützt. Jeder Nutstein 22 des Aufsteckschalters 2 besitzt eine T-förmige Form. Die Fläche 26 zwischen dem Steg 24 und dem Kopf 27 des Nutsteines ist schräg ausgebildet. Jede Nut 23 des Grundschalters 1 besteht aus senkrecht zum Gehäuse 5 angeformten Wänden 28 und je einem senkrecht zur Wand 28 verlaufenden Winkel 29. Die Winkel 29 sind dabei zueinander ausgerichtet. Die zwischen Wand 28 und Winkel 29 vorhandene Innenfläche 30 ist in ihrer Schrägheit dem Verlauf der Fläche 26 des Nutsteines 22 angepaßt. Bei der Nut 23 ist an einem Ende 31 die Wand 28 und der Winkel 29 verbunden.

Zwischen dem Gehäuse 5 des Grundschalters 1 und dem Gehäuse 15 des Aufsteckschalters 2 ist die als Schraubenfeder ausgebildete Feder 20 unverlierbar in ein Sackloch 33 im Gehäuse 15 des Aufsteckschalters 2 eingesetzt. Durch einen sternförmigen Nippel am Boden des Sackloches 33 oder durch keilförmige Spitzen am Umfang des Sackloches 33, welche nicht dargestellt sind, ist die Feder 20 unverlierbar gehaltert. Das Sackloch 33 weist in der Wand zum Gehäuse des Grundschalters 1 einen Schlitz 34 auf, der axial zum Sackloch 33 verläuft. Ein stumpfförmiger Ansatz 35 ist am Gehäuse 5 des Grundschalters 1 angebracht. Der stumpfförmige Ansatz 35 taucht beim Zusammenfügen der Klipsverbindung 21 in einen Schlitz 34 des Sackloches 33 im Gehäuse 15 des Aufsteckschalters 2 ein und drückt die Feder 20 zusammen. Zum Einsetzen der Feder 20 in das Sackloch 33 ist im Gehäuse 15 des Aufsteckschalters 2 eine Halbschale 36 eingelassen. Die Enden der Nutsteine 22 und der Nuten 23 sind schräg aufeinander abgestimmt, zum leichteren Einstecken der Führungsmittel 19 sind an den Nuten 23 Einführschrägen 37 angebracht.

Die Klipsverbindung 21 umfaßt einen federnden Klipsarm 38 mit einer zugehörigen Klipsnase 39, die hinter eine Schulter 40 eines Klipssteges 41 einrastet. Am Gehäuse 15 des Aufsteckschalters 2 befindet sich der federnde Klipsarm 38 für die Klipsverbindung 21. Am Gehäuse 5 des Grundschalters 1 ist der Klipssteg 41 mit der Schulter 40 angeordnet. Beim Zusammenschieben der Führungsmittel 19 greift der Ansatz 35 in den Schlitz 36 und schiebt die Feder 20 zusammen. Gleichzeitig gleitet der federnde Klipsarm 38 am Gehäuse 5 des Grundschalters 1 entlang, weicht dem Gehäuse 5 des Grundschalters 1 aus und rastet mit seiner Klipsnase 39 hinter die Schulter 40 ein. Der federnde Klipsarm 38 besitzt einen Lösehebel 42 der über die Schulter 40 des Klipssteges 41 in einen Freiraum 43 hineinragt. Zum Lösen der Klipsverbindung 21 wird der federnde Klipsarm 38 an seinem Lösehebel 42 in Richtung des Aufsteckschalters 2 bewegt. Die Klipsnase 39 kommt von der Schulter 40 frei, die Feder 20 drückt den Grundschalter 1 und den Aufsteckschalter 2 in den Führungsmitteln 19 soweit auseinander, daß die Klipsverbindung 21 gelöst ist. Ein erneutes Herstellen der Klipsverbindung 21 ist durch Zusammendrücken des Grundschalters 1 und des Aufsteckschalter 2 erreichbar.

## Patentansprüche

1. Lenkstockschalter für Kraftfahrzeuge, der am Ende eines die Lenksäule aufnehmenden Mantelrohres angeordnet ist und mehrere, je aus einem Gehäuse mit elektrischen Anschlüssen und einem Betätigungsorgan bestehende Einzelschalter aufweist, dadurch gekennzeichnet, daß mindestens ein Einzelschalter auf den anderen Einzelschalter gegen die Kraft einer Feder (20) unter dem Zusammenspiel entsprechender Führungsmittel (19) aufsteckbar und in seiner Endposition durch lösbare Klipsverbindung (21) festgelegt ist.

2. Lenkstockschalter nach Anspruch 1, dadurch gekennzeichnet, daß ein Einzelschalter als Grundschalter (1) am Ende des Mantelrohres (7) befestigt ist, und der andere Einzelschalter als Aufsteckschalter (2) auf das Gehäuse (5) des Grundschalters (1) aufsteckbar ist.

3. Lenkstockschalter nach einem der Ansprüche 1 und 2, dadurch gekennzeichnet, daß am Aufsteckschalter (2) mindestens ein Nutstein (22) vorgesehen ist, der in eine Nut (23) des Grundschalters (1) eingreift.

4. Lenkstockschalter nach einem der Ansprüche 1 bis 3, dadurch gekennzeichnet, daß zwei Nutsteine (22) des Aufsteckschalters (2) an Stegen (24) am Gehäuse (15) angebracht sind, die annähernd die gleiche Länge wie das Gehäuse (5) des Grundschalters (1) besitzen und über Laschen (25) am Gehäuse (15) abgestützt sind.

5. Lenkstockschalter nach einem der Ansprüche 1 bis 4, dadurch gekennzeichnet, daß jeder Nutstein (22) des Aufsteckschalters (2) T-fömig ausgebildet ist, wobei die zwischen dem Steg (24) und dem Kopf (27) des Nutsteines (22) liegende Fläche (26) schräg ausgeführt ist.

6. Lenkstockschalter nach einem der Ansprüche 1 bis 5, dadurch gekennzeichnet, daß die Nut (23) des Grundschalters (1) aus zum Gehäuse (5) senkrecht angeformten Wänden (28) und je einem senkrecht zur Wand (28) verlaufenden Winkel (29) besteht, wobei die Winkel (29) zueinander ausgerichtet sind, die Innenfläche (30) zwischen Wand (28) und Winkel (29) schräg verläuft und an einem Ende (31) der Nut (23) die Wand (28) und der Winkel (29) verbunden sind.

7. Lenkstockschalter nach einem der Ansprüche 1 bis 6, dadurch gekennzeichnet, daß die als Schraubenfeder ausgebildete Feder (20) unverlierbar in ein Sackloch (33) im Gehäuse (15) des Aufsteckschalters (2) eingesetzt ist.

8. Lenkstockschalter nach einem der Ansprüche 1 bis 7, dadurch gekennzeichnet, daß eine Wand des Sackloches (33) einen Schlitz (34) aufweist, der axial zum Sackloch (33) verläuft.

9. Lenkstockschalter nach einem der Ansprüche 1 bis 8, dadurch gekennzeichnet, daß am Gehäuse (5) des Grundschalters (1) ein stumpfförmiger Ansatz (35) angebracht ist, der beim Herstellen der Klispverbindung (21) in den Schlitz (34) des Sackloches (33) im Gehäuse (15) des Aufsteckschalters (2) eintaucht und die Feder (20) zusammendrückt.

10. Lenkstockschalter nach einem der Ansprüche 1 bis 9, dadurch gekennzeichnet, daß die Klipsverbindung (21) einen federnden Klipsarm (38) mit einer Klipsnase (39) aufweist, die hinter eine Schulter (40) eines Klipssteges (41) einrastet.

11. Lenkstockschalter nach einem der Ansprüche 1 bis 10, dadurch gekennzeichnet, daß der federnde Klipsarm (38) der Klipsverbindung (21) am Gehäuse (15) des Aufsteckschalters (2) und der Klipssteg (41) mit der Schulter (40) am Gehäuse (5) des Grundschalters (1) angeordnet ist, wobei der federnde Klipsarm (38) einen Lösehebel (42), der über die Schulter (40) des Klipssteges (41) in einen Freiraum (43) hineinragt, aufweist.

## Claims

1. Steering column switch for automotive vehicles, which switch is disposed on the end of an outer sleeve accommodating the steering column and has a plurality of individual switches, each comprising a housing with electrical connections and an actuating member, characterised in that at least one individual switch is mountable on the other individual switch in opposition to the force of a spring (20) with the interplay of appropriate guide means (19) and is secured in its end position by detachable clip-in connection (21).

2. Steering column switch according to claim 1, characterised in that one individual switch is secured as basic switch (1) on the end of the outer sleeve (7), and the other individual switch is mountable as attachable switch (2) on the housing (5) of the basic switch (1).

3. Steering column switch according to one of claims 1 and 2, characterised in that at least one grooved block (22) is provided on the attachable switch (2), which block engages in a groove (23) of the basic switch (1).

4. Steering column switch according to one of claims 1 to 3, characterised in that two grooved blocks (22) of the attachable switch (2) are attached to webs (24) on the housing (15), which blocks have approximately the same length as the housing (5) of the basic switch (1) and are supported on the housing (15) via lugs (25).

5. Steering column switch according to one of claims 1 to 4, characterised in that each grooved block (22) of the attachable switch (2) has a T-shaped configuration, the face (26) situated between the web (24) and the head (27) of the grooved block (22) being inclined.

6. Steering column switch according to one of claims 1 to 5, characterised in that the groove (23) of the basic switch (1) comprises walls (28), which are perpendicular to the housing (5), and a respective bracket (29), which extends perpendicular to the wall (28), the brackets (29) being orientated towards one another, the internal surface (30) between wall (28) and bracket (29) extending inclinedly, and the wall (28) and the bracket (29) being connected at one end (31) of the groove (23).

7. Steering column switch according to one of claims 1 to 6, characterised in that the spring (20), which is configured as a helical spring, is non-detachably inserted into a blind bore (33) in the housing (15) of the attachable switch (2).

8. Steering column switch according to one of claims 1 to 7, characterised in that one wall of the blind bore (33) has a slot (34), which extends axially relative to the blind bore (33).

9. Steering column switch according to one of claims 1 to 8, characterised in that a truncated extension member (35) is attached to the housing (5) of the basic switch (1), said member extending into the slot (34) of the blind bore (33) in the housing (15) of the attachable switch (2) when the clip-in connection (21) is being established, and said member compressing the spring (20).

10. Steering column switch according to one of claims 1 to 9, characterised in that the clip-in connection (21) has a resilient clip-in arm (38) with a clip-in projection (39), which projection engages behind a shoulder (40) of a clip-in web (41).

11. Steering column switch according to one of claims 1 to 10, characterised in that the resilient clip-in arm (38) of the clip-in connection (21) is disposed on the housing (15) of the attachable switch (2), and the clip-in web (41) is disposed with the shoulder (40) on the housing (5) of the basic switch (1), the resilient clip-in arm (38) having a release lever (42), which protrudes into a cavity (43) via the shoulder (40) of the clip-in web (41).

## Revendications

1. Interrupteur sur colonne de direction pour véhicule automobile, du type aménagé à une extrémité d'un carter tubulaire entourant la colonne de direction et comprenant plusieurs interrupteurs individuels comportant chacun des connexions électriques et un organe de commande sortant d'un boîtier, caractérisé en ce qu'au moins un interrupteur individuel est enfonçable sur les autres interrupteurs individuels en opposition à la force d'un ressort (20) sous l'action conjointe d'un élément de guidage correspondant (19) et est fixé dans sa position finale par une liaison par clipsage détachable (21).

2. Interrupteur sur colonne de direction selon la revendication 1, caractérisé en ce qu'un interrupteur individuel est fixé à l'extrémité du carter tubulaire (7) en tant qu'interrupteur de base (1) et que l'autre interrupteur individuel est enfonçable sur le boîtier (5) de l'interrupteur de base (1) en tant qu'interrupteur clipsable (2).

3. Interrupteur sur colonne de direction selon l'une des revendications 1 et 2, caractérisé en ce que, sur l'interrupteur clipsable (2) est prévu au moins un coulisseau (22) qui s'insère dans une rainure (23) de l'interrupteur de base (1).

4. Interrupteur sur colonne de direction selon l'une des revendications 1 à 3, caractérisé en ce que deux coulisseaux (22) de l'interrupteur clipsable (2) sont associés à des guides (24) du boîtier (15), qui possèdent sensiblement la même longueur que le boîtier (5) de l'interrupteur de base (1) et qui prennent appui par des pattes (25) sur le boîtier (15).

5. Interrupteur sur colonne de direction selon l'une des revendications 1 à 4, caractérisé en ce que chaque coulisseau (22) de l'interrupteur clipsable (2) a une section en forme de T, la surface (26) située entre la nervure (24) et la tête (27) du coulisseau (22) étant construite obliquement.

6. Interrupteur sur colonne de direction selon l'une des revendications 1 à 5, caractérisé en ce que la rainure (23) de l'interrupteur de base (1) se compose de parois (28) verticales par rapport au boîtier (5) et, verticalement par rapport à chacune de ces parois (28), d'une portion angulaire (29), les faces de cette portion angulaire (29) étant orientées l'une vers l'autre, les surfaces internes (30) entre les parois (28) et la portion angulaire (29) étant obliques et les parois (28) et la portion angulaire (29) se réunissant à une extrémité (31) de la rainure (23).

7. Interrupteur sur colonne de direction selon l'une des revendications 1 à 6, caractérisé en ce que le ressort (20) consistant en un ressort hélicoïdal est inséré de manière inamovible dans un trou en forme de poche (33) du boîtier (15) de l'interrupteur clipsable (2).

8. Interrupteur sur colonne de direction selon l'une des revendications 1 à 7, caractérisé en ce qu'une paroi du trou en forme de poche (33) présente une fente (34) s'étendant parallèlement à l'axe du trou en forme de poche (33).

9. Interrupteur sur colonne de direction selon l'une des revendications 1 à 8, caractérisé en ce que le long du boîtier (5) de l'interrupteur de base (1) est prévu un appendice plat (35) qui, au moment de l'accouplement par clipsage (21), est enfoncé dans la fente (34) du trou en forme de poche (33) du boîtier (15) de l'interrupteur clipsable en comprimant le ressort (20).

10. Interrupteur sur colonne de direction selon l'une des revendications 1 à 9, caractérisé en ce que la liaison par clipsage (21) comporte un bras de clipsage (38) avec un nez de clipsage (39) qui vient s'accrocher derrière un épaulement (40) d'une nervure de clipsage (41).

11. Interrupteur sur colonne de direction selon l'une des revendications 1 à 10, caractérisé en ce que le bras de clipsage élastique (38) de la liaison par clipsage (21) est aménagé sur le boîtier (15) de l'interrupteur clipsable (2) et en ce que la nervure de clipsage (41) avec l'épaulement (40) est aménagée sur le boîtier (5) de l'interrupteur de base (1), le bras de clipsage élastique (38) présentant un levier de libération (42) qui s'accroche dans l'épaulement (40) de la nervure de clipsage (41) dans un espace libre de celle-ci.
